# EUROPÄISCHE PATENTSCHRIFT

(11) **EP 3 504 866 B1**
(45) Veröffentlichungstag und Bekanntmachung des Hinweises auf die Patenterteilung: **24.02.2021**
(21) Anmeldenummer: 17765360.7
(22) Anmeldetag: 28.08.2017
(51) Int. Cl.: H04L 29/12

(54) **VERFAHREN ZUM ZUWEISEN EINER MAC-ADRESSE UND DATENBANK MIT MAC-ADRESSEN**
METHOD FOR ALLOCATING A MAC ADDRESS AND DATA BASE CONTAINING MAC ADDRESSES
PROCÉDÉ D'ALLOCATION D'UNE ADRESSE MAC ET BASE DE DONNÉES CONTENANT D'ADRESSES MAC

(30) Priorität: 29.08.2016 DE 102016116077
(43) Veröffentlichungstag der Anmeldung: 03.07.2019
(73) Patentinhaber: Unify Patente GmbH & Co. KG, 80807 München (DE)
(72) Erfinder: LEDERER, Thomas, 82211 Herrsching (DE); ZEINER, Johann, 85757 Karlsfeld (DE)
(74) Vertreter: Pösentrup, Judith
(86) Internationale Anmeldenummer: PCT/EP2017/071581
(87) Internationale Veröffentlichungsnummer: WO 2018/041795

(56) Entgegenhaltungen:
- EP-A1- 1 511 235
- WO-A1-2015/181429
- US-A1- 2004 141 468
- US-A1- 2007 211 653
- US-B1- 6 363 423

## Beschreibung

Die Erfindung betrifft ein Verfahren zum Zuweisen einer MAC-Adresse zu einem Kommunikationsgerät in einer Netzwerkumgebung sowie ein Datenbank mit MAC-Adressen.

Im Zuge des effizienteren Nutzens von vorhandenem Arbeitsplatz ist das Konzept der sogenannten Desksharing-Umgebungen oder sogenannte "Flexible Offices" entwickelt worden, welche eine Organisationsform eines Unternehmens darstellen, bei der innerhalb einer Organisationseinheit (Unternehmen, Hauptabteilung, Abteilung) Mitarbeiter zur besseren Auslastung der Arbeitsplätze innerhalb des Bürogebäudes ihren Arbeitsplatz täglich frei wählen können. Durch die Umsetzung dieses Konzepts können Arbeitgeber nicht nur den Raumbedarf für ihre Mitarbeiter optimieren, sondern es werden auch andere Kosten, wie Büroausstattungskosten, Reinigungskosten, Energiekosten, etc. eingespart. Um die Effizienz in einem derartigen Konzept jedoch weiter zu optimieren, ist es notwendig, dass die Mitarbeiter möglichst viele Informationen und Daten elektronisch gespeichert haben, so dass der tägliche Wechsel von Schreibtisch zu Schreibtisch ohne großen Aufwand erfolgen kann. Beim problemlosen Übergang von einem Arbeitsplatz zu einem nächsten spielt aber nicht nur die Verfügbarkeit von Daten für den Arbeitnehmer eine Rolle, sondern auch die telefonische Erreichbarkeit des Arbeitnehmers an dem jeweiligen Arbeitsplatz. Insbesondere ist es wichtig, dass der Nutzer des flexiblen Arbeitsplatzes nahtlos mit seiner Telefonnummer bzw. mit dem der Telefonnummer zugeordneten Endgerät von einem Arbeitsplatz zu einem anderen wechseln kann.

Beispielsweise sollte es in einer Desksharing-Umgebung mit verschiedenen Telefonen für einen Benutzer möglich sein, dass er sich an jedem Telefon unter derselben Telefonnummer, vorzugsweise seiner eigenen, anmeldet. Das heißt, dass er seine eigene oder ihm zugewiesene Rufnummer - sowie eine persönliche Tastenprogrammierung, etc. - von Telefon zu Telefon in der Desksharing-Umgebung mitnimmt. Nach Anmeldung an dem jeweiligen Telefon, wird die Rufnummer des Nutzers dann sowohl für ein- als auch für ausgehende Anrufe verwendet.

Problematisch ist hierbei allerdings, dass bei einem Schreibtisch- bzw. einem damit verbundenen Telefonwechsel, insbesondere in Zusammenhang mit der Verwendung von Bluetooth-Headsets des täglich von Schreibtisch zu Schreibtisch wechselnden Nutzers, die Kopplung des Bluetooth-Headsets jeweils über einen allgemein im Stand der Technik bekannten Pairing-Vorgang erfolgen muss. Hierbei wird die jeweilige MAC-Adresse der beiden an der Bluetooth-Verbindung beteiligten Geräte jeweils wechselseitig konfiguriert, abgefragt und gespeichert. Ist es nun beabsichtigt, das Bluetooth-Headset beispielsweise in der Desksharing-Umgebung oder z. B. beim Teleworking an einem anderen Desk-Telefon zu verwenden, dann muss der zeitaufwändige Pairing-Vorgang erneut durchgeführt werden. In solchen Umgebungen ist demzufolge bei jedem Wechsel des Schreibtischs bzw. Arbeitsplatzes ein erneutes Pairing des Headsets des Nutzers durchzuführen, da die Headsets aufgrund der eingeschränkten Bedienbarkeit nur eine begrenzte Anzahl von Partnergeräten unterstützen, z. B. lediglich zwei oder drei.

Problematisch, ausgehend von dieser Situation ist es, dass nach einer erstmaligen Anmeldung eines Nutzers in der Netzwerkumgebung z. B. an einem ersten Desk-Telefon bei einer folgenden Anmeldung an einem anderen Desk-Telefon ein erneutes Pairing mit dem Headset des Nutzers erforderlich ist, was recht zeitaufwändig ist. Das Pairing erfolgt, indem die beiden zu paarenden Geräte ihre MAC-Adressen austauschen und wechselseitig speichern. Finden beide Geräte die MAC-Nummern des jeweils anderen Gerätes in ihrem Speicher, so entfällt das Pairing vor der erneuten Anmeldung. Allerdings ist der Speicherplatz speziell von mobilen Geräten, wie z. B. Headsets, sehr begrenzt. Es können also nicht besonders viele verschiedene MAC-Nummern gespeichert werden.

Daher wäre es wünschenswert, wenn der Pairing-Zustand eines bereits in dem Netzwerkumgebung gepaarten Endgeräts eines Nutzers quasi mit dem Nutzer innerhalb der Netzwerkumgebung mitwandert.

Die Druckschrift US 2007/211653 A1 betrifft eine drahtlose Kommunikationseinrichtung, ein MAC Adressmanagementsystem, ein Verfahren zur drahtlosen Kommunikation und ein Programm.

Die Druckschrift WO 2015/181429 A1 betrifft ein Verfahren und Netzwerkelement zur verbesserten Benutzerauthentifizierung in Kommunikationsnetzwerken.

EP 1 511 235 A1 offenbart ein Verfahren zur Verwendung eines tragbaren Kommunikationsgeräts, welches in verschiedenen Netzwerkumgebungen verwendet werden kann, ohne ein erneutes Pairing zwischen den Kommunikationsgeräten zu erfordern. Hierzu wird einem personalisierten Profil eines Nutzers eine eindeutige Adresse zugewiesen, welche für einen Kopplungsvorgang zwischen einem Terminal des Netzwerks und einem persönlichen tragbaren Gerät verwendet wird. Nach einer erfolgreichen Kopplung wird eine solche Initialisierung in einem personalisierten Profil beeinflusst. Letzteres wird für die zukünftige drahtlose Kommunikation zwischen dem persönlichen tragbaren Gerät und einem mit dem Netzwerk verbundenen Terminal verwendet, wobei dann für eine Initialisierung kein Pairing-Vorgang mehr erforderlich ist, da für den Aufbau einer drahtlosen Kommunikation einige Parameter verwendet werden, die sich auf das angerufene persönliche Profil auswirken.

Daher ist es die Aufgabe der vorliegenden Erfindung, ein Verfahren zum Zuweisen einer MAC-Adresse zu einem Kommunikationsgerät in einer Netzwerkumgebung bereitzustellen, welche es einem Nutzer erlauben, ein bereits in der Netzwerkumgebung mit einem Telefonie-Endgerät gepairtes Headset ohne nochmaliges Pairing an weiteren Telefonie-Endgeräten zu nutzen. Diese Aufgabe wird durch ein Verfahren zum Zuweisen einer MAC-Adresse zu einem Kommunikationsgerät in einer Netzwerkumgebung mit den Merkmalen gemäß Anspruch 1 gelöst.

Demnach wird erfindungsgemäß ein Verfahren zum Zuweisen einer MAC-Adresse zu einem Kommunikationsgerät in einer Netzwerkumgebung, welche eine Anzahl von Kommunikationsgeräten, insbesondere eine Anzahl von Telefonie-Endgeräten und zumindest ein Nahfeld-Kommunikationsgerät, miteinander verbindet, bereitgestellt, wobei das Kommunikationsgerät mit einer MAC-Adresse konfiguriert werden kann, wobei beim Anmelden des Nutzers in die Netzwerkumgebung über ein Kommunikationsgerät von der Anzahl von Kommunikationsgeräten, insbesondere über ein Telefonie-Endgerät, eine dem Nutzer zugeordnete und für den Nutzer spezifische MAC-Adresse zum Pairing mit einem dem Nutzer zugeordneten Kommunikationsgerät, insbesondere einem Nahfeld-Kommunikationsgerät, verwendet wird. Die erfindungsgemäße Lösung verwendet eindeutige Bluetooth MAC-Adressen, welche dem Nutzer und nicht dem Gerät zugeordnet sind. Die Adresse wird beim Einloggen des Nutzers gesetzt. Das erfindungsgemäße Verfahren ermöglicht es einem Nutzer, der ein Nahfeld-Kommunikationsgerät das als Bluetooth Headset ausgeführt ist verwendet, in einer Desksharing-Umgebung verschiedene Kommunikationsgeräte zu verwenden, ohne dass nach Anmeldung des Nutzers an einem neuen Kommunikationsgerät sein bereits beim erstmaligen Anmelden in die Desksharing-Umgebung gepaartes Headset nochmals mit dem neuen Kommunikationsgerät paaren zu müssen. Das System verhindert auch ein zweimaliges Einloggen des Nutzers. Durch die benutzerspezifische Vergabe der Bluetooth MAC-Adresse ist ein erneutes Pairing des Headsets nicht mehr notwendig, da im Headset die bestehende Partnerschaft wiederverwendet werden kann.

Gemäß der Erfindung ist die Netzwerkumgebung ein Teil einer Desksharing-Umgebung, welche die Anzahl von Kommunikationsgeräten umfasst, insbesondere zumindest ein erstes und zweites Telefonie-Endgerät und zumindest das Nahfeld-Kommunikationsgerät, ein Bluetooth-Headset.

Dabei wird die dem Nutzer zugeordnete und für den Nutzer spezifische MAC-Adresse zum Pairing des Kommunikationsgeräts, insbesondere des Telefonie-Endgeräts, mit dem Nahfeld-Kommunikationsgerät des Nutzers, insbesondere mit dem Bluetooth-Headset, in dem Kommunikationsgerät konfiguriert, wobei das Pairing beim erstmaligen Anmelden des Nutzers in einer ersten Umgebung der Netzwerkumgebung zwischen einem ersten Kommunikationsgerät und dem Nahfeld-Kommunikationsgerät des Nutzers in der ersten Umgebung ausgeführt wird.

Darüber hinaus ist es vorteilhaft, wenn bei einem dem erstmaligen Anmelden des Nutzers folgenden wiederholten Anmelden des Nutzers in einer zweiten Umgebung der Netzwerkumgebung ein zweites Kommunikationsgerät die dem Nutzer zugeordnete und für den Nutzer spezifische MAC-Adresse verwendet. Hierdurch wird ein erneutes Pairing zwischen dem zweiten Kommunikationsgerät und dem Nahfeld-Kommunikationsgerät des Nutzers überflüssig.

Gemäß der Erfindung erfolgt das Anmelden des Nutzers in die Netzwerkumgebung über das Kommunikationsgerät. Ferner kann beim Anmelden des Nutzers in die Netzwerkumgebung dem Kommunikationsgerät eine dem Nutzer zugeordnete Telefonnummer zugewiesen werden.

Darüber hinaus ist es vorteilhaft, dass die dem Nutzer eindeutig zugehörige Kennung, welche zum Erzeugen der MAC-Adresse an dem ersten Telefonie-Endgerät in der ersten Umgebung verwendet wird, durch Berechnen eines Hash-Wertes, insbesondere von 24 bit aus der Telefonnummer des Nutzers erzeugt wird.

So kann in der lokalen Umgebung, welche einen Radius von zwischen 10 m und 100 m, je nach Bluetooth-Klasse umfassen kann, eine Doppelzuweisung der MAC-Adresse effektiv vermieden werden. Es muss lediglich sichergestellt werden, dass beim Anmeldevorgang am jeweiligen Telefonie-Endgerät auf allen Geräten dann die dem Nutzer zugeordnete benutzerspezifische MAC-Adresse (entweder zugewiesen und im Benutzerprofil hinterlegt oder über den festgelegten Hash-Algorithmus) verwendet wird.

Die dem Nutzer eindeutig zugehörige Kennung kann in einer zentralen Datenbank des Netzwerks, insbesondere in einer Kommunikationsgerät-Konfigurationsdatenbank, gespeichert werden, welche vorteilhafterweise der Mobilität von Nutzern der Netzwerkumgebung dient.

Dabei wird die dem Nutzer eindeutig zugehörige Kennung in einen individuell konfigurierbaren Teil der MAC-Adresse geschrieben bzw. eingelesen, insbesondere in eine aus 3 Bytes bestehende zweite Hälfte der MAC-Adresse. Eine MAC-Adresse besteht aus 48 bit. Die ersten 3 Bytes sind auf dabei auf die Herstellerkennung festgelegt. In der zweiten Hälfte, welche ebenfalls 3 Bytes beträgt, können laut Standard des Herstellers individuell festgelegte Werte verwendet werden. Üblicherweise werden für diesen individuellen Tel der MAC-Adresse Werte verwendet, die aus einer eindeutigen Seriennummer eines Geräts abgeleitet werden. Gemäß der Erfindung wird jedoch in die individuelle Hälfte der MAC-Adresse eine eindeutig dem Nutzer zugeordnete Kennung geschrieben, um so eine benutzerspezifische MAC-Adresse zu generieren.

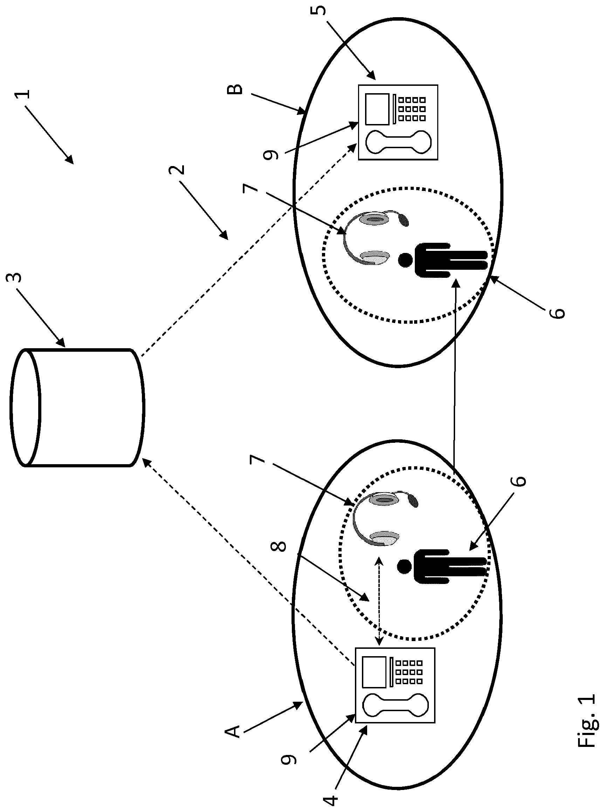

Im Folgenden wird die Erfindung anhand bevorzugter Ausführungsbeispiele und mit Hilfe der Figur näher beschrieben. Dabei ist bzw. sind
- Fig. 1: eine schematische Darstellung einer Netzwerkumgebung gemäß einer Ausführungsform der Erfindung.

Fig. 1 eine schematische Darstellung einer Netzwerkumgebung 1 gemäß einer Ausführungsform der Erfindung, welche in dem hier dargestellten Beispiel ein Netzwerk 2 umfasst, über welches eine zentrale Datenbank 3 mit einem ersten Kommunikationsgerät 4 und mit einem zweiten Kommunikationsgerät verbunden ist. Die zentrale Datenbank ist eine Kommunikationsgerät-Konfigurationsdatenbank und das erste Kommunikationsgerät 4 sowie das zweite Kommunikationsgerät 5 sind jeweils Telefonie-Endgeräte in Form von Desktop-Telefonen, welche einem Nutzer 6 der Netzwerkumgebung 1 zur Verfügung stehen. Der Nutzer 6 verfügt dabei über ein Nahfeld-Kommunikationsgerät 7 zum Beispiel in Form eines Headsets, welches ausgestaltet ist, um sich über eine Bluetooth-Verbindung 8 mit einem jeweiligen Telefonie-Endgerät bzw. ersten Kommunikationsgerät 4 oder zweiten Kommunikationsgerät 5 zu verbinden.

Im Folgenden wird kurz das allgemeine Konzept der dargestellten Netzwerkumgebung 1, welche dem Nutzer ein sogenanntes "User Mobility"-Feature bereitstellt, beschrieben werden. Die dargestellte Netzwerkumgebung 1 ist als Desksharing-Umgebung implementiert, welche eine Anzahl von voll ausgestatteten Arbeitsplätzen umfasst. So kann beispielsweise in einer ersten Umgebung A ein erster Arbeitsplatz vorhanden sein und in einer zweiten Umgebung B ein zweiter Arbeitsplatz. Weitere identische oder zumindest ähnlich ausgestattete Arbeitsplätze können in weiteren Umgebungen vorhanden sein, welche hier jedoch nicht weiter dargestellt sind. Die Netzwerkumgebung 1 bzw. Desksharing-Umgebung kann jedoch eine beliebige Anzahl von Arbeitsplätzen, z. B. mit identischer Ausstattung oder mit ähnlicher Ausstattung oder mit einer Ausstattung für spezielle Zwecke, enthalten. Jeder Arbeitsplatz verfügt dabei über ein Kommunikationsgerät, wie beispielsweise das erste Kommunikationsgerät 4 bzw. Telefonie-Endgerät in der ersten Umgebung A und das zweite Kommunikationsgerät 5 bzw. Telefonie-Endgerät in der zweiten Umgebung B. Die Desksharing-Umgebung wird von einem Nutzer 6, wie beispielsweise ein Mitarbeiter einer Firma, derartig benutzt, dass er zu Beginn seiner Arbeitsschicht einen bestimmten Arbeitsplatz auswählt oder diesem zugewiesen wird. Zur Nutzung des an diesem Arbeitsplatz vorhandenen Kommunikationsgeräts, zum Beispiel dem ersten Kommunikationsgerät 4 in Form eines Telefonie-Endgeräts bzw. Desktop-Telefons, muss der Nutzer 6 sich unter seiner bzw. einer ihm zugeordneten oder zugewiesenenTelefonnummer anmelden. Diese Telefonnummer nimmt der Nutzer 6 dann jeweils mit, wenn er sich beispielsweise am nächsten Arbeitstag an einem anderen Arbeitsplatz, beispielsweise an dem zweiten Kommunikationsgerät 5 in der zweiten Umgebung B, anmeldet. So ist der Nutzer 6 immer in der Lage, unter seiner ihm zugeordneten Telefonnummer ein- und ausgehende Anrufe zu tätigen, nachdem er sich an dem jeweiligen Arbeitsplatz angemeldet bzw. eingeloggt hat. Die dem Nutzer 6 zugewiesene Telefonnummer wandert daher sozusagen mit dem Nutzer 6 von Arbeitsplatz zu Arbeitsplatz mit, ebenso wie eine persönliche Tastenprogrammierung und dergleichen, die er beispielsweise benötigt, um sich an einem beliebigen Arbeitsplatz anzumelden bzw. einzuloggen.

In aus dem Stand der Technik bekannten Desksharing-Umgebungen ist es für den Nutzer, wie eingangs bereits ausgeführt, bei jedem Wechsel des Arbeitsplatzes, d.h. bei jedem Anmelden bzw. Einloggen an einem dem Arbeitsplatz zugehörigen Kommunikationsgerät erforderlich, ein beispielsweise von dem Nutzer 6 verwendetes Bluetooth Headset 7 mit dem jeweiligen Kommunikationsgerät, beispielsweise mit dem ersten Kommunikationsgerät 4, wenn der Arbeitsplatz des Nutzers 6 in der ersten Umgebung A ist, über die Bluetooth-Verbindung 8 zu paaren (Pairing). Dabei werden üblicherweise die MAC-Adressen der am Pairing-Vorgang beteiligten Geräte über die Bluetooth-Verbindung 8 ausgetauscht und die jeweilige andere MAC-Adresse gespeichert. Bezogen auf das hier dargestellte Beispiel würde beispielsweise in der ersten Umgebung A dann die MAC-Adresse des ersten Kommunikationsgeräts 4 und die MAC-Adresse des Bluetooth Headsets 7 über die Bluetooth-Verbindung 8 ausgetauscht und die MAC-Adresse des Bluetooth Headsets 7 im Kommunikationsgerät 4 gespeichert sowie die MAC-Adresse des Kommunikationsgeräts 4 in dem Bluetooth Headset 7 gespeichert. Bei einem Wechsel des Nutzers 6 beispielsweise in die Umgebung B wäre dieser Pairing-Vorgang dann erneut zwischen dem Bluetooth Headset 7 und dem zweiten Kommunikationsgerät 5 auszuführen, da Headsets aufgrund der eingeschränkten Bedienbarkeit nur eine begrenzte Anzahl, beispielsweise zwei, konfigurierte Partnergeräte unterstützen..

Ein erneutes Pairing beim Wechsel des Arbeitsplatzes kann jedoch durch die erfindungsgemäße Konfiguration vermieden werden. Heutige Bluetooth Chipsätze erlauben eine Konfiguration der Bluetooth MAC-Adresse, beispielsweise über eine Software-Funktion. Gemäß einer Ausführungsform der vorliegenden Erfindung wird unter Verwendung eines solchen Bluetooth Chipsatzes eine MAC-Adresse erzeugt bzw. konfiguriert, welche dem Nutzer zugeordnet ist und für den Nutzer spezifisch ist. Eine derartige eindeutige benutzerspezifische MAC-Adresse wird dabei aus der Telefonnummer des Nutzers 6 konfiguriert. Dabei wird dieser benutzerspezifische Teil, welcher sich z. B. wie oben erwähnt auf die Telefonnummer des Nutzers 6 bezieht, in die aus 3 Bytes bestehende zweite Hälfte der MAC-Adresse, welche den individuell konfigurierbaren Teil der MAC-Adresse darstellt geschrieben. Für diesen individuell konfigurierbaren Teil der MAC-Adresse werden normalerweise. Die erste Hälfte der MAC-Adresse, welche ebenfalls aus 3 Bytes besteht, ist dagegen auf Herstellerkennung festgelegt und nicht konfigurierbar. Um eine Doppelzuweisung der MAC-Adresse in der Netzwerkumgebung 1 zu vermeiden, kann weiterhin ein Hash-Wert von 24 bit aus der Telefonnummer des Nutzers 6 berechnet werden, was dann die Wahrscheinlichkeit des Auftretens eines Konflikts bei einer möglichen Wertemenge von 2^24 sehr gering macht. Durch Generieren der benutzerspezifischen MAC-Adresse, wie oben beschrieben, entsteht somit eine eindeutige MAC-Adresse, die dem Nutzer 6 zugeordnet ist und nicht dem Gerät, welche beim erstmaligen Anmelden des Nutzers 6 in die Netzwerkumgebung 1 z. B. in der ersten Umgebung A an dem ersten Kommunikationsgerät 4 konfiguriert bzw. generiert wird. Diese benutzerspezifische MAC-Adresse (welche über den festgelegten Hash-Algorithmus erzeugt wird, wie oben beschrieben) wird dann beim Anmeldevorgang auf allen anderen Kommunikationsgeräten, beispielsweise auf dem zweiten Kommunikationsgerät 5, verwendet, so dass ein erneutes Pairing zwischen dem zweiten Kommunikationsgerät 5 und dem Headset 7 nicht erforderlich ist.

Im Folgenden wird eine Ausführungsform des Verfahrens zum Zuweisen einer MAC-Adresse zu einem Kommunikationsgerät 4, 5 in einer Netzwerkumgebung 1 beschrieben. Der Nutzer 6, welcher das Headset 7 verwendet, loggt sich erstmalig an dem ersten Kommunikationsgerät 4 in der ersten Umgebung A in die Netzwerkumgebung 1 ein. Hierbei werden das erste Kommunikationsgerät 4 und das Headset 7 des Nutzers 6 gepaart (Pairing), wobei entweder die Bluetooth MAC-Adresse 9 aus einem Benutzer-ID berechnet wird. Beim Wechsel des Arbeitsplatzes und einem dann notwendigen Einloggen des Nutzers 6 an einem weiteren Arbeitsplatz, hier an dem zweiten Kommunikationsgerät 4 in der zweiten Umgebung B, wird dann dieselbe Bluetooth MAC-Adresse 9 wiederum aus dem Benutzer-ID mit demselben Hash-Algorithmus berechnet. Ein erneutes Pairing zwischen dem Headset 7 des Nutzers 6 und dem zweiten Kommunikationsgerät 5 ist nicht notwendig.

### Bezugszeichen

- 1: Netzwerkumgebung
- 2: Netzwerk
- 3: zentrale Datenbank / Kommunikationsgerät-Konfigurationsdatenbank
- 4: erstes Kommunikationsgerät
- 5: zweites Kommunikationsgerät
- 6: Nutzer
- 7: Nahfeld-Kommunikationsgerät bzw. Headset
- 8: Bluetooth-Verbindung
- 9: Bluetooth MAC-Adresse
- A: erste Umgebung mit erstem Arbeitsplatz
- B: zweite Umgebung mit zweitem Arbeitsplatz

## Patentansprüche

1. Verfahren zum Zuweisen einer MAC-Adresse (9) zu einem Kommunikationsgerät (4, 5) in einer Netzwerkumgebung (1), welche ein Teil einer Desksharing-Umgebung ist, welche eine Anzahl von Kommunikationsgeräten (4, 5) umfasst, wobei ein erstes Kommunikationsgerät (4) in einer ersten Umgebung (A) mit einem ersten Arbeitsplatz und ein zweites Kommunikationsgerät (5) in einer zweiten Umgebung (B) mit einem zweiten Arbeitsplatz angeordnet ist, und wobei ein Nutzer (6) über ein Nahfeld-Kommunikationsgerät (7) in Form eines Headsets verfügt, um sich über eine Bluetooth-Verbindung (8) mit dem ersten Kommunikationsgerät (4) oder dem zweiten Kommunikationsgerät (5) zu verbinden, wobei das erste und das zweite Kommunikationsgerät (4, 5) mit einer MAC-Adresse (9) konfiguriert werden können, , wobei das Anmelden des Nutzers (6) in die Netzwerkumgebung (1) über das Kommunikationsgerät (4, 5) erfolgt, und wobei beim Anmelden des Nutzers (6) in die Netzwerkumgebung (1) dem ersten Telefonie-Endgerät (4) eine dem Nutzer zugeordnete Telefonnummer zugewiesen wird,
**wobei** beim erstmaligen Anmelden des Nutzers (6) in die Netzwerkumgebung (1) über das erste Telefonie-Endgerät (4) eine dem Nutzer (6) zugeordnete und für den Nutzer spezifische MAC-Adresse (9) zum Pairing des ersten Kommunikationsgeräts (4) mit dem Headset (7) des Nutzers (6) in dem ersten Kommunikationsgerät (4) konfiguriert wird,
wobei das Pairing beim erstmaligen Anmelden des Nutzers (6) in der ersten Umgebung (A) der Netzwerkumgebung (1) zwischen dem ersten Kommunikationsgerät (4) und dem Nahfeld-Kommunikationsgerät (7) des Nutzers in der ersten Umgebung (A) ausgeführt wird,
**dadurch gekennzeichnet, dass** eine dem Nutzer (6) eindeutig zugehörige Kennung, welche zum Erzeugen der MAC-Adresse (9) an dem ersten Telefonie-Endgerät (4) in der ersten Umgebung (A) verwendet wird, erzeugt wird durch Berechnen eines Hash-Wertes unter Verwendung eines festgelegten Hash-Algorithmus von 24 bit, aus der dem Nutzer (6) zugeordneten Telefonnummer,
wobei die dem Nutzer eindeutig zugehörige Kennung in eine aus 3 Bytes bestehende zweite Hälfte einen individuell konfigurierbaren Teil der MAC-Adresse (9) geschrieben wird, um so eine benutzerspezifische MAC-Adresse (9) zu generieren, und
wobei beim Wechsel des Nutzers (6) von der ersten Umgebung (A) zu der zweiten Umgebung (B) beim Anmelden des Nutzers (6) an dem zweiten Kommunikationsgerät (5) des zweiten Arbeitsplatzes dieselbe dem Nutzer (6) zugeordnete und für den Nutzer (6) spezifische MAC-Adresse (9) verwendet wird, welche mit demselben Hash-Algorithmus berechnet wird, um ein erneutes Pairing zwischen dem Headset (7) des Nutzers (6) und dem zweiten Kommunikationsgerät (5) zu vermeiden.

## Claims

1. A method for allocating a MAC address (9) to a communication device (4, 5) in a network environment (1), which is part of a desk-sharing environment comprising a number of communication devices (4, 5), wherein a first communication device (4) is arranged in a first environment (A) with a first workstation and a second communication device (5) is arranged in a second environment (B) with a second workstation, and wherein a user (6) has a near-field communication device (7) in the form of a headset to connect to the first communication device (4) or the second communication device (5) via a Bluetooth connection (8), wherein the first and second communication devices (4, 5) can be configured with a MAC address (9), wherein the user (6) registration with the network environment (1) is executed via the communication device (4, 5), and wherein a telephone number associated with the user is allocated to the first telephony terminal (4) when the user (6) registers with the network environment (1),
wherein a MAC address (9) associated with the user (6) and specific to the user is configured in the first communication device (4) to pair the first communication device (4) with the headset (7) of the user (6) when the user (6) initially registers with the network environment (1) via the first telephony terminal (4),
wherein the pairing is executed between the first communication device (4) and the near-field communication device (7) of the user (6) in the first environment (A) when the user initially registers in the first environment (A) of the network environment (1),
**characterized in that**
a unique identifier assigned to the user (6), which is used to generate the MAC address (9) on the first telephony terminal (4) in the first environment (A), is generated by calculating a hash value using a defined hash algorithm of 24 bits from the phone number associated with the user (6),
wherein the unique identifier assigned to the user is written into a second half of an individually configurable portion of the MAC address (9) consisting of 3 bytes in order to generate a user-specific MAC address (9), and
wherein, when the user (6) changes from the first environment (A) to the second environment (B) during the user (6) registration with the second communication device (5) of the second workstation, the same MAC address (9) associated with the user (6) and specific to the user (6) is used, which MAC address (9) is calculated using the same hash algorithm to avoid a repeat pairing between the headset (7) of the user (6) and the second communication device (5).

## Revendications

1. Procédé d'allocation d'une adresse MAC (9) à un appareil de communication (4, 5) dans un environnement réseau (1), lequel est une partie d'un environnement de partage de bureau, lequel comprend un nombre d'appareils de communication (4, 5), dans lequel un premier appareil de communication (4) est agencé dans un premier environnement (A) avec un premier poste de travail et un deuxième appareil de communication (5) est agencé dans un deuxième environnement (B) avec un deuxième poste de travail, et dans lequel un utilisateur (6) dispose d'un appareil de communication à champ proche (7) sous la forme d'un casque pour se connecter au premier appareil de communication (4) ou au deuxième appareil de communication (5) via une connexion Bluetooth (8), dans lequel le premier et le deuxième appareil de communication (4, 5) peuvent être configurés avec une adresse MAC (9), dans lequel la connexion de l'utilisateur (6) dans l'environnement réseau (1) se fait par le biais de l'appareil de communication (4, 5), et dans lequel lors de la connexion de l'utilisateur (6) dans l'environnement réseau (1) un numéro de téléphone associé à l'utilisateur est alloué au premier terminal de téléphonie (4),
dans lequel lors de la première connexion de l'utilisateur (6) dans l'environnement réseau (1) par le biais du premier terminal de téléphonie (4) une adresse MAC (9) associée à l'utilisateur (6) et spécifique pour l'utilisateur est configurée pour l'appairage du premier appareil de communication (4) avec le casque (7) de l'utilisateur (6) dans le premier appareil de communication (4),
dans lequel l'appairage est réalisé lors de la première connexion de l'utilisateur (6) dans le premier environnement (A) de l'environnement réseau (1) entre le premier appareil de communication (4) et l'appareil de communication à champ proche (7) de l'utilisateur dans le premier environnement (A), **caractérisé en ce que**
un identifiant appartenant de manière univoque à l'utilisateur (6), lequel est utilisé pour la génération de l'adresse MAC (9) au niveau du premier terminal de téléphonie (4) dans le premier environnement (A), est généré par calcul d'une valeur de hachage en utilisant un algorithme de hachage prédéfini de 24 bits, à partir du numéro de téléphone associé à l'utilisateur (6),
dans lequel l'identifiant appartenant de manière univoque à l'utilisateur est écrit dans une deuxième moitié composée de 3 octets une partie configurable de manière individuelle de l'adresse MAC (9) pour générer ainsi une adresse MAC (9) spécifique à l'utilisateur, et
dans lequel lors du changement de l'utilisateur (6) du premier environnement (A) au deuxième environnement (B) lors de la connexion de l'utilisateur (6) sur le deuxième appareil de communication (5) du deuxième poste de travail la même adresse MAC (9) associée à l'utilisateur (6) et spécifique à l'utilisateur (6) est utilisée, laquelle est calculée avec le même algorithme de hachage pour éviter un nouvel appairage entre le casque (7) de l'utilisateur (6) et le deuxième appareil de communication (5).
